# EUROPEAN PATENT APPLICATION

(11) **EP 4 528 419 A1**
(43) Date of publication of application: **26.03.2025**
(21) Application number: 23807249.0
(22) Date of filing: 06.03.2023
(51) Int. Cl.: G05G 25/00, G05G 5/03, G05G 5/04, H01H 13/00, H01H 13/02, G06F 3/0362

(54) **OPERATION DEVICE AND METHOD**

(30) Priority: 18.05.2022 JP 2022081739
(71) Applicant: Alps Alpine Co., Ltd., Tokyo 145-8501 (JP)
(72) Inventor: TAKEUCHI, Shota, Tokyo 145-8501 (JP); KAWASE, Hideo, Tokyo 145-8501 (JP); YAMADA, Yukimitsu, Tokyo 145-8501 (JP); OTOMO, Takashi, Tokyo 145-8501 (JP); TAKAHASHI, Kazuhiro, Tokyo 145-8501 (JP)
(74) Representative: Maiwald GmbH
(86) International application number: PCT/JP2023/008286
(87) International publication number: WO 2023/223633

(57) **Abstract**

A manipulation device has: a manipulation unit on which a movement manipulation is possible; a sensor that outputs a detection value according to the position of the manipulation unit; a conversion unit that converts a detection value acquired by an acquisition unit to information about the position of the manipulation unit, according to conversion information; an adjustment unit that can adjust the movement limit position of the manipulation unit; and a creation unit that acquires, from the sensor, a detection value at the time when the manipulation unit has reached the relevant movement limit position for each of a plurality of movement limit positions adjustable by the adjustment unit, and creates conversion information according to a plurality of acquired detection values and to positional information indicating the actual position of each of the plurality of movement limit positions.

## Description

### Technical Field

The present invention relates to a manipulation device and a method.

### Background Art

In PTL 1 below, a technology is disclosed by which, in a manipulation device having a manipulation member on which a pressing manipulation is possible, it is possible to control a load during the pressing manipulation and to present a tactile sense to the manipulator by converting a rotational angle detected by a rotational angle detection sensor to an amount by which the manipulation member has been pressed and controlling a motor according to the amount of pressing.

### Citation List

### Patent Literature

PTL 1: Japanese Unexamined Patent Application Publication No. 2019-219948

### Summary of Invention

### Technical Problem

With the technology in PTL 1, however, a conversion expression is needed to convert the rotational angle detected by the rotational angle detection sensor to an amount by which the manipulation member has been pressed. However, there is the fear that when an appropriate conversion expression is manually set individually for each manipulation device, extra work and time are taken. Also, there is the fear that if a conversion expression common to a plurality of manipulation devices is used, conversion precision is lowered due to differences among individual manipulation devices, assembling error, time-varying changes, and the like.

### Solution to Problem

A manipulation device according to an embodiment has: a manipulation unit on which a movement manipulation is possible; sensor that outputs a detection value according to the position of the manipulation unit; a conversion unit that converts a detection value acquired by an acquisition unit to information about the position of the manipulation unit, according to conversion information; an adjustment unit that can adjust the movement limit position of the manipulation unit; and a creation unit that acquires, from the sensor, a detection value at the time when the manipulation unit has reached the relevant movement limit position for each of a plurality of movement limit positions adjustable by the adjustment unit, and creates the conversion information according to a plurality of acquired detection values and to positional information indicating the actual position of each of the plurality of movement limit positions.

### Advantageous Effects of Invention

According to the manipulation device in the embodiment, it is possible to easily create highly precise conversion information used to convert a detection value of the sensor to the position of the manipulation unit.

### Brief Description of Drawings

[Fig. 1] Fig. 1 is a side view of a manipulation device according to an embodiment.
[Fig. 2] Fig. 2 is an external perspective view of the manipulation device in the embodiment.
[Fig. 3] Fig. 3 is a graph indicating an example of load characteristics used by the manipulation device in the embodiment in tactile presentation control.
[Fig. 4] Fig. 4 is a drawing indicating an example of the functional structure of a controller that the manipulation device in the embodiment has.
[Fig. 5] Fig. 5 is a flowchart indicating an example of a procedure for processing by the controller that the manipulation device in the embodiment has.
[Fig. 6] Fig. 6 is a drawing indicating the structure of adjustment that the manipulation device in the embodiment has.
[Fig. 7] Fig. 7 is a drawing used to explain a method in which a sensor that the manipulation device in the embodiment has detects the position of a manipulation shaft.
[Fig. 8] Fig. 8 is a drawing indicating an example of positional information and a detection value, which are used in the manipulation device in the embodiment, for each movement limit position.
[Fig. 9] Fig. 9 is a drawing indicating an example of conversion information creation by the controller that the manipulation device in the embodiment has.

### Description of Embodiments

An embodiment will be described below with reference to the drawings. Incidentally, in the description below, the Z-axis direction will be taken as the up-down direction, the X-axis direction will be taken as the front-back direction, and the Y-axis direction will be taken as the left-right direction, for convenience of explanation. However, the positive Z-axis direction will be taken as the upward direction, the positive X-axis direction will be taken as the forward direction, and the positive Y-axis direction will be taken as the right direction.

### (Structure of a manipulation device 100)

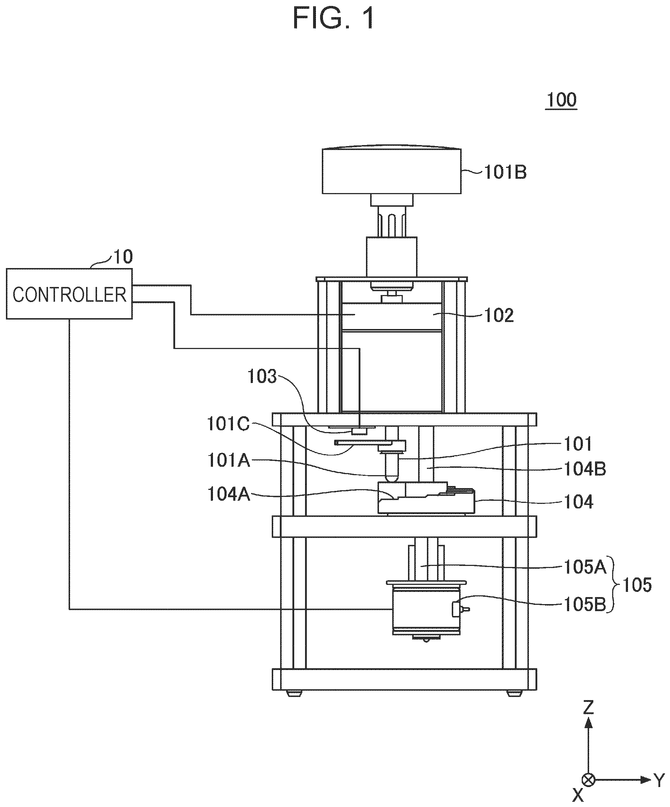

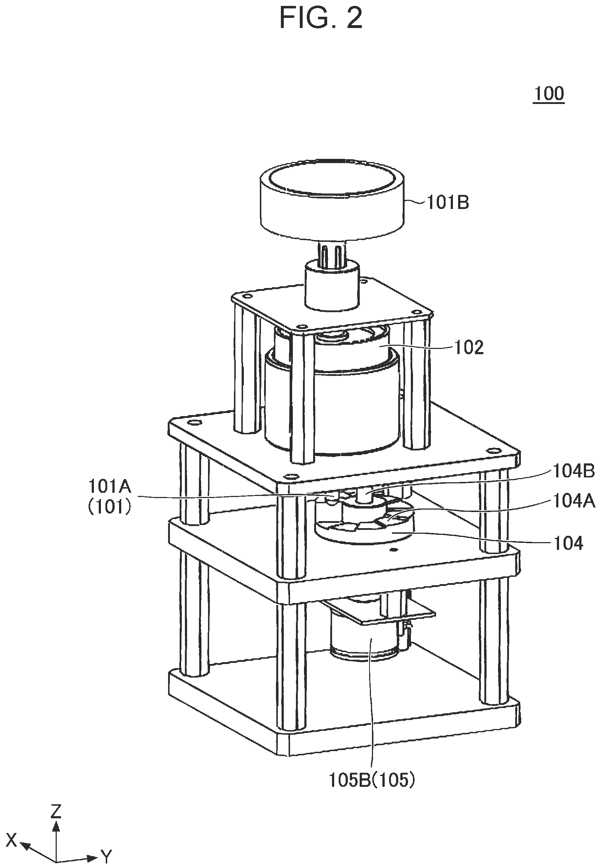

Fig. 1 is a side view of a manipulation device 100 according to an embodiment. Fig. 2 is an external perspective view of the manipulation device 100 in the embodiment. The manipulation device 100 indicated in Fig. 1 and Fig. 2 is used in various electronic units (game controllers and the like, for example). With the manipulation device 100, a movement manipulation by pressing or the like by the user is possible. As indicated in Fig. 1 and Fig. 2, the manipulation device 100 has a manipulation shaft 101 (an example of a "manipulation unit") extending in the up-down direction (Z-axis direction). A manipulation knob 101B is attached to the manipulation shaft 101. In the example indicated in Fig. 1 and Fig. 2, the manipulation knob 101B is attached to the upper end of the manipulation shaft 101. With the manipulation device 100, the manipulation shaft 101 can be moved downward by a pressing manipulation (an example of the "movement manipulation") in the downward direction for the manipulation knob 101B. An amount by which the manipulation shaft 101 moves downward is detected by a sensor 103 and is output from the sensor 103 to a controller 10.

As indicated in Fig. 1 and Fig. 2, the manipulation device 100 has the manipulation shaft 101, a force sense generator 102, the sensor 103, an adjustment unit 104, an electrically powered unit 105, and the controller 10.

The manipulation shaft 101 is a rod-like member extending in the up-down direction (Z-axis direction). The manipulation shaft 101 is provided so as to pass through the interior of the force sense generator 102. The manipulation shaft 101 can linearly move in the interior of the force sense generator 102 in the up-down direction (Z-axis direction). A tip 101A in a hemispherical shape is formed at the lower end (the end on the negative side of the Z axis) of the manipulation shaft 101. The tip 101A protrudes downward from the lower surface of the force sense generator 102. The upper end (the end on the positive side of the Z axis) of the manipulation shaft 101 protrudes upward from the upper surface of the force sense generator 102. The manipulation knob 101B is attached to the upper end (the end on the positive side of the Z axis) of the manipulation shaft 101.

The force sense generator 102 is an example of a "load applying unit". The force sense generator 102 supports the manipulation shaft 101, which passes through the interior of the force sense generator 102, so that the manipulation shaft 101 is linearly movable in the up-down direction (Z-axis direction), and applies a force to the manipulation shaft 101. Due to this, the force sense generator 102 applies a load to the pressing manipulation for the manipulation knob 101B. The force sense generator 102 can operate under control of the controller 10. In this embodiment, a voice coil motor is used as the force sense generator 102. However, without being limited by this, another device (such as, for example, a linear motor or a device that uses a magneto-rheological fluid) may be used as the force sense generator 102.

The sensor 103 outputs a detection value according to the position of the manipulation shaft 101. The sensor 103 acquires the detection value according to the position of the manipulation shaft 101 and outputs the acquired detection value to the controller 10. The sensor 103 outputs a detection value according to the position of the manipulation shaft 101 at least in its axial direction. In this embodiment, the sensor 103 is provided on the force sense generator 102 and outputs a detection value according to the distance to a reflecting plate 101C attached to the manipulation shaft 101. The sensor 103 may be, for example, a photo sensor.

The adjustment unit 104 is a member that can adjust the movement limit position of the manipulation shaft 101. The adjustment unit 104 has a discoidal shape when viewed in, for example, the X-axis direction. The upper surface of the adjustment unit 104 is a contact surface 104A that the tip 101A of the manipulation shaft 101 will come into contact with. As indicated in Fig. 1 and Fig. 2, the contact surface 104A is formed spirally in a stepped shape so that its height position becomes higher with respect to the lowest height position as the height position proceeds counterclockwise in the circumferential direction. Also, a rotational shaft 104B in a rod shape, which extends in the up-down direction (Z-axis direction), is provided at the center of the adjustment unit 104 in the X-axis direction and Y-axis direction. Due to this, the adjustment unit 104 is rotatable with the rotational shaft 104B taken as the center of rotation. Incidentally, the rotational shaft 104B is provided with a greater offset in the right direction (the positive direction of the Y axis) than does the manipulation shaft 101. Due to this, with the manipulation device 100 in the embodiment, the tip 101A of the manipulation shaft 101 can be brought into contact with the contact surface 104A.

The electrically powered unit 105 is a device that can move the adjustment unit 104 to cause it to change the movement limit position of the manipulation shaft 101. Specifically, the electrically powered unit 105 rotates and moves the adjustment unit 104 to cause it to change the movement limit position of the manipulation shaft 101. The electrically powered unit 105 has a rotational axis 105A in a rod shape, which extends in the up-down direction (Z-axis direction), and a rotation driving body 105B, which can rotate the rotational axis 105A. The rotation driving body 105B can operate under control of the controller 10. A stepping motor, for example, can be used as the rotation driving body 105B. The rotational axis 105A is provided concentrically with the rotational shaft 104B of the adjustment unit 104 and below the rotational shaft 104B. The rotational axis 105A is linked to the rotational shaft 104B. Due to this, the electrically powered unit 105 can rotate the adjustment unit 104 by driving of the rotation driving body 105B to rotate the rotational axis 105A.

### (Operation of the manipulation device 100)

With the manipulation device 100 in the embodiment, when a pressing manipulation for the manipulation knob 101B is performed, the manipulation shaft 101 moves downward. At this time, the amount of movement of the manipulation shaft 101 is detected by the sensor 103. Also, at this time, the manipulation device 100 can apply a driving force to the manipulation shaft 101 in the up-down direction (Z-axis direction) with the force sense generator 102. With the manipulation device 100, since the tip 101A of the manipulation shaft 101 is brought into contact with the contact surface 104A of the adjustment unit 104, the amount of downward movement of the manipulation shaft 101 is restricted.

With the manipulation device 100 in the embodiment, the adjustment unit 104 is caused to rotate and move under control of the controller 10, so the movement limit position of the manipulation shaft 101 can be adjusted to each of a plurality of movement limit positions.

That is, with the manipulation device 100 in the embodiment, the lower the height position of the contact surface 104A positioned immediately below the tip 101A is, the more greatly the maximum amount of pressing of the manipulation shaft 101 can be increased. The higher the height position of the contact surface 104A positioned immediately below the tip 101A is, the more greatly the maximum amount of pressing of the manipulation shaft 101 can be reduced.

### (Example of tactile presentation control by the controller 10)

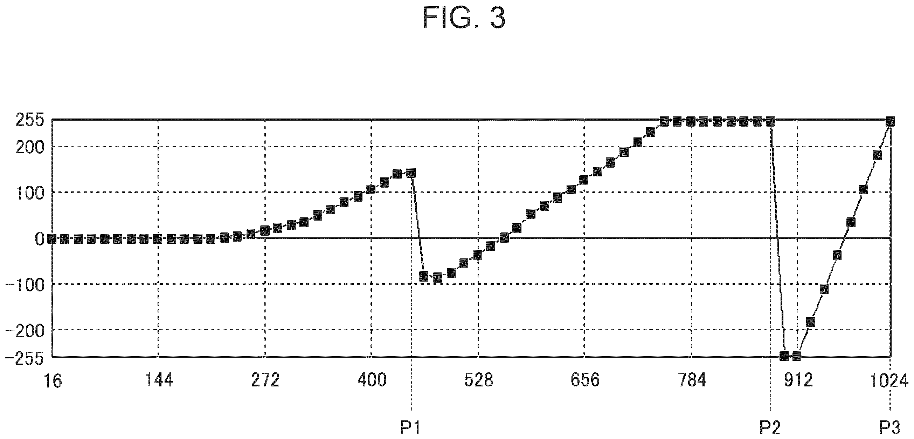

Fig. 3 is a graph indicating an example of load characteristics used by the manipulation device 100 in the embodiment in tactile presentation control. The graph indicated in Fig. 3 represents load characteristics used by the controller 10 that the manipulation device 100 has to control a load during a pressing manipulation by the manipulation knob 101B. In the graph indicated in Fig. 3, the vertical axis represents load during a pressing manipulation and the horizontal axis indicates the amount of pressing in the pressing manipulation (that is, the amount of downward movement of the manipulation shaft 101). Also, in the graph indicated in Fig. 3, P1 indicates a "first pressing position" (pressing amount 448), P2 indicates a "second pressing position" (pressing amount 880), and P3 indicates a "third pressing position" (pressing amount 1024).

During a time until the pressing position of the manipulation knob 101B reaches the first pressing position P1, since a force applied to the manipulation shaft 101 by the force sense generator 102 is controlled under control of the controller 10, a load during the pressing manipulation is adjusted so that as the amount of pressing gradually increases, the load is gradually increased as indicated in Fig. 3.

When the pressing position of the manipulation knob 101B has reached the first pressing position P1, since the force applied to the manipulation shaft 101 by the force sense generator 102 is controlled under control of the controller 10, the load during the pressing manipulation is steeply reduced from the first maximum value (150) to the first minimum value (-100) as indicated in Fig. 3. At this time, since the load during the pressing manipulation is steeply reduced, the manipulation knob 101B is urged to the same direction as the manipulation direction (that is, downward direction). Due to this, the manipulation device 100 can present a click feeling to the manipulator.

Next, during a time until the pressing position of the manipulation knob 101B reaches the second pressing position P2 after the first pressing position P1, since the force applied to the manipulation shaft 101 by the force sense generator 102 is controlled under control of the controller 10, the load during the pressing manipulation is adjusted so that as the amount of pressing gradually increases, the load is gradually increased as indicated in Fig. 3.

When the pressing position of the manipulation knob 101B has reached the second pressing position P2, since the force applied to the manipulation shaft 101 by the force sense generator 102 is controlled under control of the controller 10, the load during the pressing manipulation is steeply reduced from the second maximum value (255) to the second minimum value (-255) as indicated in Fig. 3. Due to this, the manipulation device 100 can present a click feeling to the manipulator.

Next, during a time until the pressing position of the manipulation knob 101B reaches the third pressing position P3 after the second pressing position P2, since the force applied to the manipulation shaft 101 by the force sense generator 102 is controlled under control of the controller 10, the load during the pressing manipulation is adjusted so that as the amount of pressing gradually increases, the load is gradually increased as indicated in Fig. 3.

When the pressing position of the manipulation knob 101B has reached the third pressing position P3, the load during the pressing manipulation is controlled to the second maximum value (255) as indicated in Fig. 3.

### (Example of the functional structure of the controller 10)

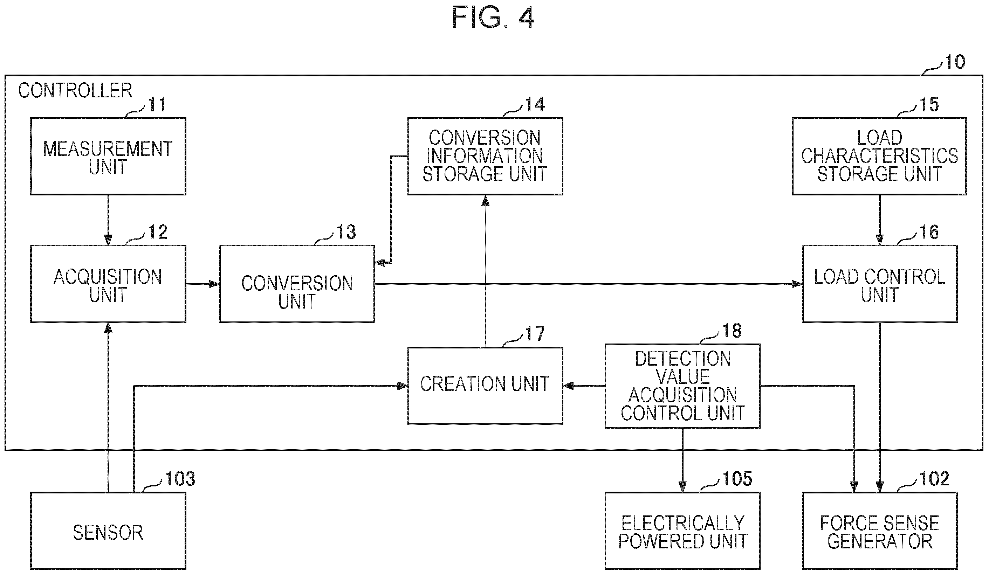

Fig. 4 is a drawing indicating an example of the functional structure of the controller 10 that the manipulation device 100 in the embodiment has. As indicated in Fig. 4, the controller 10 has a measurement unit 11, an acquisition unit 12, a conversion unit 13, a conversion information storage unit 14, a load characteristics storage unit 15, a load control unit 16, a creation unit 17, and a detection value acquisition control unit 18.

The measurement unit 11 repeatedly executes measurement of time taken until a sensor read moment occurs. In the controller 10, the sensor read moment repeatedly occurs at predetermined time intervals.

The acquisition unit 12 acquires a detection value output from the sensor 103 each time a sensor read moment occurs.

The conversion unit 13 converts a detection value acquired by the acquisition unit 12 to a stroke position of the manipulation shaft 101 (an example of a "manipulation unit position"), according to conversion information stored in the conversion information storage unit 14.

The load characteristics storage unit 15 stores load characteristics (see Fig. 3) used to control the load of the pressing manipulation by the manipulation knob 101B.

The load control unit 16 determines a load corresponding to the stroke position, obtained by the conversion unit 13, of the manipulation shaft 101, as a load to be applied to the manipulation shaft 101 (that is, the pressing manipulation for the manipulation knob 101B), according to the load characteristics stored in the load characteristics storage unit 15. Then, the load control unit 16 controls the force sense generator 102 to have it apply the determined load to the manipulation shaft 101 (that is, the pressing manipulation for the manipulation knob 101B).

For each of a plurality of movement limit positions to be adjusted by the adjustment unit 104, the creation unit 17 acquires, from the sensor 103, a detection value at a time when the manipulation shaft 101 has reached the relevant movement limit position, after which the creation unit 17 creates conversion information to be used by the conversion unit 13, according to a plurality of acquired detection values and to positional information indicating the actual position of each of the plurality of movement limit positions. The conversion information created by the creation unit 17 is stored by the conversion information storage unit 14.

In this embodiment, the creation unit 17 creates an approximate expression used to calculate a stroke position of the manipulation shaft 101 from a detection value of the sensor 103, as an example of conversion information.

When the creation unit 17 creates conversion information, the detection value acquisition control unit 18 sequentially adjusts the movement limit position of the manipulation shaft 101 to each of the plurality of movement limit positions by rotating the adjustment unit 104. Each time the movement limit position of the manipulation shaft 101 is adjusted, the detection value acquisition control unit 18 causes the manipulation shaft 101 to reach the relevant movement limit position and causes the creation unit 17 to acquire the detection value, of the sensor 103, corresponding to the relevant movement limit position.

Incidentally, the controller 10 is structured by having, for example, a CPU (Central Processing Unit), a ROM (Read Only Memory), a RAM (Random Access Memory), and the like. Each functional unit, described above, of the controller 10 is implemented by, for example, the CPU's execution of programs stored in the ROM in the controller 10.

### (Example of a procedure for processing y the controller 10)

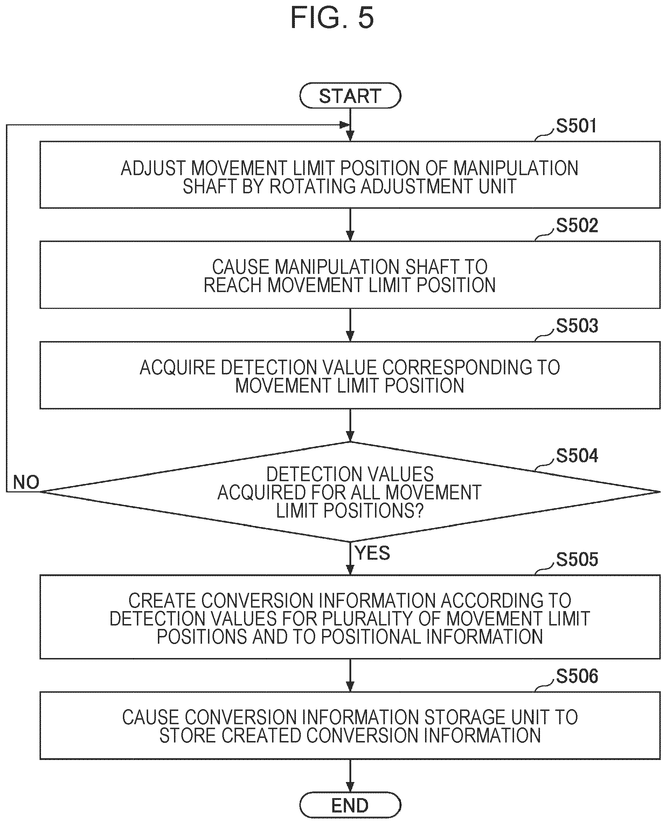

Fig. 5 is a flowchart indicating an example of a procedure for processing by the controller 10 that the manipulation device 100 in the embodiment has.

First, the detection value acquisition control unit 18 adjusts the movement limit position of the manipulation shaft 101 to any of a predetermined plurality of movement limit positions (that is, any of a plurality of steps that the contact surface 104A has) by controlling the electrically powered unit 105 to have it rotate the adjustment unit 104 (step S501).

Next, the detection value acquisition control unit 18 causes the manipulation shaft 101 to reach the movement limit position by controlling the force sense generator 102 to have it apply a force to the manipulation shaft 101 to move the manipulation shaft 101 downward (step S502). At this time, the force sense generator 102 functions as a movement control unit that can control the movement of the manipulation shaft 101.

In this case, when, for example, the output value of the sensor 103 does not change any longer, the detection value acquisition control unit 18 can decide that the manipulation shaft 101 has reached the movement limit position. However, without being limited by this, the detection value acquisition control unit 18 may decide, by another method, that the manipulation shaft 101 has reached the movement limit position.

Next, the creation unit 17 acquires the detection value corresponding to the movement limit position from the sensor 103 (step S503).

Next, the detection value acquisition control unit 18 decides whether detection values have been acquired for all of the predetermined plurality of movement limit positions (step S504).

If it is decided in step S504 that detection values have not been acquired for all of the predetermined plurality of movement limit positions (No in step S504), the controller 10 returns processing to step S501.

Conversely, if it is decided in step S504 that detection values have been acquired for all of the predetermined plurality of movement limit positions (Yes in step S504), the creation unit 17 creates conversion information to be used by the conversion unit 13, according to a plurality of detection values acquired in step S503 and to positional information indicating the actual position of each of the predetermined plurality of movement limit positions (step S505).

Then, the creation unit 17 causes the conversion information storage unit 14 to store the conversion information created in step S505 (step S506). After that, the controller 10 terminates the series of processing indicated in Fig. 5.

### (Example of the structure of the adjustment unit 104)

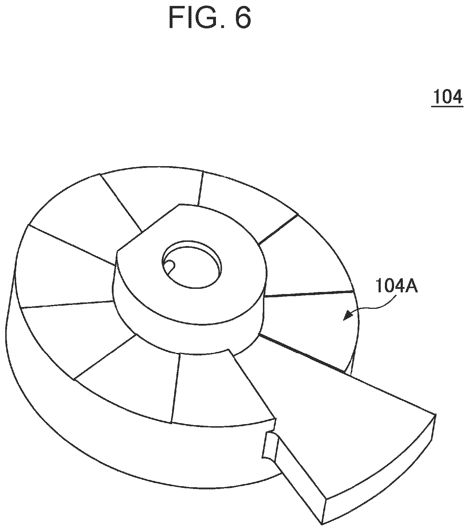

Fig. 6 is a drawing indicating the structure of the adjustment unit 104 that the manipulation device 100 in the embodiment has. As indicated in Fig. 6, the adjustment unit 104 has the contact surface 104A formed spirally in a stepped shape. Due to this, along with the rotation of the adjustment unit 104, the adjustment unit 104 can change the contact position, at which the tip 101A of the manipulation shaft 101 makes contact, on the contact surface 104A in steps. Thus, the movement limit position of the manipulation shaft 101 can be changed in steps. Particularly, in the example indicated in Fig. 6, the contact surface 104A has a ten-step spiral shape. Therefore, by rotating the adjustment unit 104 in increments of 36°, the manipulation device 100 in the embodiment can sequentially change the step of the contact surface 104A that the tip 101A of the manipulation shaft 101 will come into contact with.

Incidentally, the contact surface 104A may be in a smooth spiral shape without being limited to a spirally stepped shape. In this case, by rotating and moving the adjustment unit 104, the manipulation device 100 in the embodiment can steplessly change the height position of the contact surface 104A that the tip 101A will come into contact with. Also, the contact surface 104A may be formed spirally in nine steps or less or may be formed spirally in 11 steps or more.

Furthermore, the contact surface 104A is not limited to the above shapes. It suffices that the adjustment unit 104 has a contact surface having a plurality of contact positions along the axial direction of the manipulation shaft 101 and that the movement limit position of the manipulation shaft 101 used as a manipulation unit can be adjusted when a periphery in the axial direction is rotated to change the contact position at which the tip 101A of the manipulation shaft 101 will make contact.

### (Method in which the sensor 103 detects the position of the manipulation shaft 101)

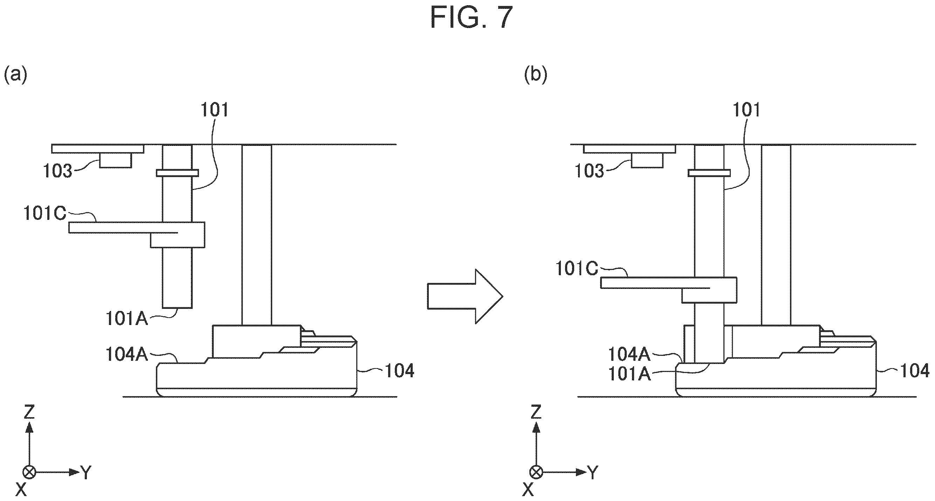

Fig. 7 is a drawing used to explain a method in which the sensor 103 that the manipulation device 100 in the embodiment has detects the position of the manipulation shaft 101.

In the manipulation device 100 in the embodiment, the adjustment unit 104 is provided immediately below the manipulation shaft 101, as indicated in Fig. 7. Therefore, by moving the manipulation shaft 101 downward to bring the tip 101A of the manipulation shaft 101 into contact with the contact surface 104A of the adjustment unit 104, the manipulation device 100 in the embodiment enables the manipulation shaft 101 to reach the movement limit position, as indicated in Fig. 7(b).

Also, in the manipulation device 100 in the embodiment, the reflecting plate 101C is provided immediately below the sensor 103, as indicated in Fig. 7. Since the reflecting plate 101C is fixed to the manipulation shaft 101, the reflecting plate 101C moves in the up-down direction (the Z-axis direction) together with the manipulation shaft 101. Therefore, when the manipulation shaft 101 has already reached the movement limit position as indicated in Fig. 7(b), the sensor 103 can output a detection value corresponding to the movement limit position by detecting the distance to the reflecting plate 101C.

The contact surface 104A of the adjustment unit 104 has a spirally stepped shape. Therefore, the manipulation device 100 in the embodiment can change the step, on the contact surface 104A, that the tip 101A of the manipulation shaft 101 will come into contact with by rotating the adjustment unit 104. Thus, the manipulation device 100 can adjust the movement limit position of the manipulation shaft 101.

### (Example of positional information and the detection value for each movement limit position)

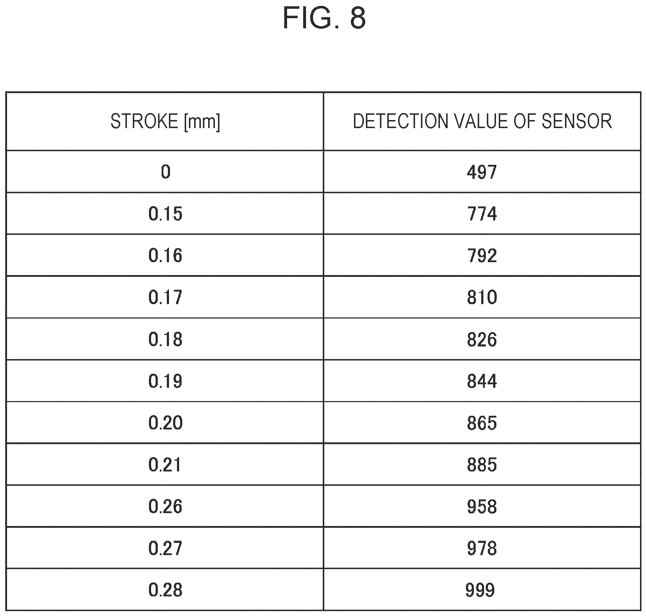

Fig. 8 is a drawing indicating an example of positional information and the detection value, which are used in the manipulation device 100 in the embodiment, for each movement limit position.

In the manipulation device 100 in the embodiment, positional information (in this embodiment, represented as the amount of stroke of the manipulation shaft 101) is set in advance for each of a plurality of movement limit positions, the positional information indicating the actual position of the movement limit position, as indicated in Fig. 8.

Then, the manipulation device 100 in the embodiment acquires a detection value of the sensor 103 for each of the plurality of movement limit positions, the detection value corresponding to the position of the manipulation shaft 101 at the time when the manipulation shaft 101 has reached the relevant movement limit position, as indicated in Fig. 8.

In the example indicated in Fig. 8, since the contact surface 104A of the adjustment unit 104 has a ten-step spiral shape, positional information is set in advance for each of 10 movement limit positions, which are determined by the contact surface 104A. In addition, detection values of the sensor 103 have been acquired.

Incidentally, in Fig. 8, positional information "0" indicates the amount of stroke of the manipulation shaft 101 at the time when no pressing manipulation has been performed, that is, the initial position of the manipulation shaft 101. In the example indicated in Fig. 8, a detection value of the sensor 103 has been acquired for this initial position of the manipulation shaft 101 as well.

### (Example of conversion information creation)

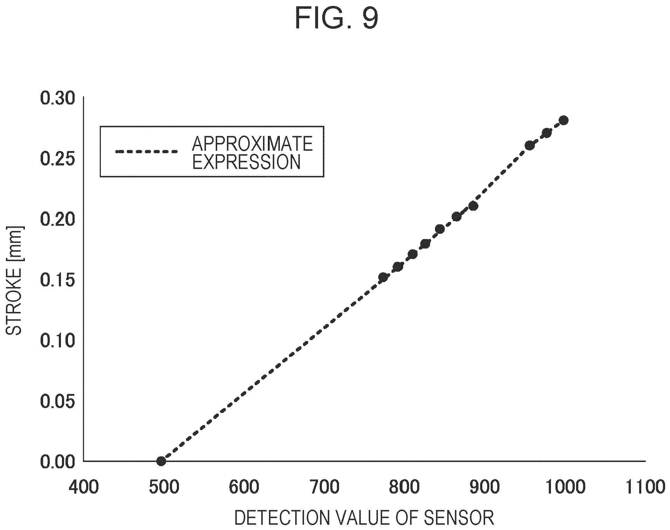

Fig. 9 is a drawing indicating an example of conversion information creation by the controller 10 that the manipulation device 100 in the embodiment has. The graph indicated in Fig. 9 represents an approximate expression created by the creation unit 17 in the controller 10. The vertical axis indicates the stroke position of the manipulation shaft 101, and the horizontal axis indicates the detection value of the sensor 103.

As indicated in Fig. 9, the creation unit 17 in the controller 10 can create an approximate expression used to calculate a stroke position of the manipulation shaft 101 from a detection value of the sensor 103, according to positional information about each of a plurality of movement limit positions and to the detection value for each of the plurality of movement limit positions, the plurality of movement limit positions and the detection values for them being indicated in Fig. 8.

The approximate expression created in this way is stored in the conversion information storage unit 14 in the controller 10. After that, the conversion unit 13 in the controller 10 can convert a detection value, acquired by the acquisition unit 12, of the sensor 103 to a stroke position of the manipulation shaft 101 by using the approximate expression stored in the conversion information storage unit 14.

The approximate expression indicated in Fig. 9 is a highly precise approximate expression created according to a plurality of actually measured values (the detection values of a plurality of sensors 103) for which differences among individual manipulation devices 100 and the like have been additionally considered. Therefore, by calculating the stroke position of the manipulation shaft 101 by using the approximate expression indicated in Fig. 9, the manipulation device 100 in the embodiment can highly precisely calculate the stroke position of the manipulation shaft 101 with the suppression of the effects of differences among individual manipulation devices 100, assembling error, time-varying changes, and the like.

Incidentally, the manipulation device 100 may perform conversion information creation at a predetermined timing (for example, at shipping from the factory, at the time of first use, at intervals of a predetermined period, at intervals of a predetermined length of usage time, and the like) or at a timing specified by the user. Also, the manipulation device 100 can periodically create highly precise conversion information for which the effect of time-varying changes of the manipulation device 100 can be suppressed by periodically performing conversion information creation.

Also, in this embodiment, an approximate expression is created as an example of conversion information. However, without being limited by this, this is not a limitation, a conversion table, for example, may be created that is used to convert a detection value of the sensor 103 to a stroke position of the manipulation shaft 101.

### (Effects)

As described above, the manipulation device 100 according to the embodiment has: the manipulation shaft 101 on which a movement manipulation is possible, the sensor 103 that outputs a detection value according to the position of the manipulation shaft 101; the acquisition unit 12 that acquires the detection value output from the sensor 103; the conversion unit 13 that converts the detection value acquired by the acquisition unit 12 to the position of the manipulation shaft 101, according to conversion information; the adjustment unit 104 that can adjust the movement limit position of the manipulation shaft 101; and the creation unit 17 that acquires, from the sensor 103, a detection value at the time when the manipulation shaft 101 has reached the relevant movement limit position for each of a plurality of movement limit positions adjustable by the adjustment unit 104, and creates conversion information according to a plurality of acquired detection values and to positional information indicating the actual position of each of the plurality of movement limit positions.

Due to this, according to the manipulation device 100 in the embodiment, highly precise conversion information used to convert a detection value of the sensor 103 to the position of the manipulation shaft 101 can be easily created.

Particularly, according to the manipulation device 100 in the embodiment, by acquiring, from the sensor 103, a detection value at the time when the manipulation shaft 101 has reached a movement limit position, a detection value of the sensor 103 when the position of the manipulation shaft 101 is stable can be acquired, so more highly precise conversion information can be created.

Also, in the manipulation device 100 in the embodiment, the creation unit 17 creates, as conversion information, an approximate expression used to calculate the position of the manipulation shaft 101 from a detection value of the sensor 103.

Due to this, according to the manipulation device 100 in the embodiment, the conversion unit 13 can highly precisely calculate the position of the manipulation shaft 101 from a detection value of the sensor 103 by using the approximate expression created by the creation unit 17. Also, according to the manipulation device 100 in the embodiment, by using the approximate expression, the position of the manipulation shaft 101 can be highly precisely calculated for an intermediate position as well, at which measurement for a detection value has not been performed when conversion information is created.

Also, the manipulation device 100 in the embodiment has the detection value acquisition control unit 18 that sequentially adjusts the adjustment unit 104 to each of the plurality of movement limit positions when the creation unit 17 creates conversion information, after which, at each movement limit position adjustment, the detection value acquisition control unit 18 causes the manipulation shaft 101 to reach the relevant movement limit position, and causes the creation unit 17 to acquire the detection value, of the sensor 103, corresponding to the relevant movement limit position.

Due to this, according to the manipulation device 100 in the embodiment, a detection value at each of a plurality of movement limit positions can be automatically acquired under control of the detection value acquisition control unit 18, so extra work involved in the user can be reduced.

Also, the manipulation device 100 in the embodiment has the force sense generator 102 (load applying unit) that applies a load to a movement manipulation for the manipulation shaft 101. The detection value acquisition control unit 18 causes the manipulation shaft 101 to reach the relevant movement limit position by driving the force sense generator 102.

Due to this, according to the manipulation device 100 in the embodiment, it is possible to cause the manipulation shaft 101 to automatically reach a movement limit position under control of the detection value acquisition control unit 18, so extra work involved in the user can be reduced.

So far, an embodiment of the present invention has been described in detail. However, the present invention is not limited to the embodiment. Various variations and modifications are possible without departing from the intended scope, described in the claims, of the present invention.

In the embodiment, an example has been described in which the present invention is applied to a manipulation device on which a pressing manipulation is possible as an example of a "movement manipulation by the manipulation unit". However, without being limited by this, the present invention can also be applied to a manipulation device on which other manipulations (such as, for example, a rotation manipulation, a slide manipulation, and the like) are possible as "movement manipulations by the manipulation unit".

Also, in this embodiment, a detection value of the sensor 103 is acquired for each of a plurality of positions, which have been set in advance, of the manipulation shaft 101, and conversion information is created according to a plurality of acquired detection values. However, the position of the manipulation shaft 101 may be measured for each of a plurality of detection values, which have been set in advance, of the sensor 103, and conversion information may be created according to a plurality of measured positions, for example.

Also, in the structure in the embodiment, the detection value acquisition control unit 18 has caused the manipulation shaft 101 (manipulation unit) to automatically reach a movement limit position by driving the force sense generator 102 (movement control unit). However, without being limited by this, a structure may be taken in which the user manually causes the manipulation shaft 101 to reach a movement limit position by performing a movement manipulation for the manipulation shaft 101.

This international application claims priority based on Japanese Patent Application No. 2022-081739 filed on May 18, 2022, and the entire contents of the application are incorporated in this international application.

### Reference Signs List

10 controller
11 measurement unit
12 acquisition unit
13 conversion unit
14 conversion information storage unit
15 load characteristics storage unit
16 load control unit
17 creation unit
18 detection value acquisition control unit
100 manipulation device
101 manipulation shaft (manipulation unit)
101A tip
101B manipulation knob
101C reflecting plate
102 force sense generator (load applying unit)
103 sensor
104 adjustment unit
104A contact surface
104B rotational shaft
105 electrically powered unit
105A rotational axis
105B rotation driving body
P1 first pressing position
P2 second pressing position
P3 third pressing position

## Claims

1. A manipulation device **characterized by** having:
a manipulation unit on which a movement manipulation is possible;
a sensor that outputs a detection value according to a position of the manipulation unit;
a conversion unit that converts the detection value to information about a position of the manipulation unit, according to conversion information;
an adjustment unit capable of adjusting a movement limit position of the manipulation unit; and
a creation unit that acquires, from the sensor, the detection value at a time when the manipulation unit has reached a relevant movement limit position for each of a plurality of movement limit positions adjustable by the adjustment unit, and creates the conversion information according to a plurality of acquired detection values and to positional information indicating an actual position of each of the plurality of movement limit positions.

2. The manipulation device according to claim 1, **characterized in that** the creation unit creates, as the conversion information, an approximate expression used to calculate the position of the manipulation unit from the detection value.

3. The manipulation device according to claim 1, **characterized by** further having a detection value acquisition control unit that sequentially adjusts the adjustment unit to each of the plurality of movement limit positions when the creation unit creates the conversion information, after which, at each movement limit position adjustment, the detection value acquisition control unit causes the manipulation unit to reach the relevant movement limit position, and causes the creation unit to acquire the detection value corresponding to the relevant movement limit position.

4. The manipulation device according to claim 3, **characterized by** further having a movement control unit that is capable of controlling movement of the manipulation unit, the manipulation device being **characterized in that**
the detection value acquisition control unit causes the manipulation unit to reach the relevant movement limit position by driving the movement control unit.

5. The manipulation device according to claim 4, **characterized in that** the movement control unit is a load applying unit that applies a load to a movement manipulation for the manipulation unit.

6. The manipulation device according to claim 1, **characterized in that**:
the manipulation unit has a manipulation shaft that moves in an axial direction due to the movement manipulation; and
the adjustment unit has a contact surface, and is capable of adjusting the movement limit position of the manipulation unit by changing a contact position at which a tip of the manipulation shaft will make contact, the contact position being on the contact surface.

7. The manipulation device according to claim 6, **characterized in that** the adjustment unit has a contact surface having a plurality of contact positions along the axial direction as the contact surface, and is capable of adjusting the movement limit position of the manipulation unit when a periphery in the axial direction is rotated to change the contact position at which the tip of the manipulation shaft will make contact.

8. The manipulation device according to claim 1 **characterized in that** the sensor outputs a detection value according to a distance to a position of the manipulation unit in the axial direction, as the detection value.

9. A method in which a manipulation device is used that has a manipulation unit on which a movement manipulation is possible and an adjustment unit capable of adjusting a movement limit position of the manipulation unit, the method being **characterized by** comprising the steps of:
outputting a detection value according to a position of the manipulation unit;
converting the detection value to information about a position of the manipulation unit, according to conversion information; and
acquiring the detection value at a time when the manipulation unit has reached a relevant movement limit position for each of a plurality of movement limit positions adjustable by the adjustment unit, and creating the conversion information according to a plurality of acquired detection values and to positional information indicating an actual position of each of the plurality of movement limit positions.
